# EUROPÄISCHE PATENTSCHRIFT

(11) **EP 3 137 746 B1**
(45) Veröffentlichungstag und Bekanntmachung des Hinweises auf die Patenterteilung: **20.03.2019**
(21) Anmeldenummer: 15722058.3
(22) Anmeldetag: 31.03.2015
(51) Int. Cl.: F01N 3/20, F01N 13/00, F01N 11/00, B01D 53/94

(54) **VERFAHREN ZUR ALTERUNGSERKENNUNG EINES HETEROGENEN KATALYSATORS, ABGASNACHBEHANDLUNGSSYSTEM FÜR EINE BRENNKRAFTMASCHINE UND BRENNKRAFTMASCHINE**
DETERIORATION DETERMINATION METHOD FOR A HETEROGENEOUS CATALYST, EXHAUST GAS TREATMENT SYSTEM FOR AN INTERNAL COMBUSTION ENGINE AND INTERNAL COMBUSTION ENGINE
PROCÉDÉ POUR LA DÉTERMINATION DE LA DÉTÉRIORATION D'UN CATALYSEUR HÉTÉROGÈNE, SYSTÈME DE TRAITEMENT DES GAZ D'ÉCHAPPEMENT D'UN MOTEUR À COMBUSTION INTERNE ET MOTEUR À COMBUSTION INTERNE

(30) Priorität: 29.04.2014 DE 102014208095
(43) Veröffentlichungstag der Anmeldung: 08.03.2017
(73) Patentinhaber: MTU Friedrichshafen GmbH, 88045 Friedrichshafen (DE)
(72) Erfinder: WEHLER, Klaus, 88046 Friedrichshafen (DE); RUSCH, Klaus, 88147 Achberg (DE)
(74) Vertreter: Kordel, Mattias
(86) Internationale Anmeldenummer: PCT/EP2015/000693
(87) Internationale Veröffentlichungsnummer: WO 2015/165565

(56) Entgegenhaltungen:
- EP-A2- 2 180 157
- DE-A1- 3 841 685
- DE-A1- 4 112 478
- DE-A1- 10 332 057
- DE-A1-102012 217 832

## Beschreibung

Die Erfindung betrifft ein Verfahren zur Alterungserkennung eines heterogenen Katalysators gemäß Anspruch 1, ein Abgasnachbehandlungssystem für eine Brennkraftmaschine gemäß Anspruch 9 und eine Brennkraftmaschine gemäß Anspruch 13.

Heterogene Katalysatoren, also Katalysatoren, deren Material in einer Phase oder einem Aggregatzustand vorliegt, die/der von einer Phase oder einem Aggregatzustand eines an dem Katalysator umzusetzenden Mediums verschieden ist, weisen als ein wesentliches Funktionsprinzip eine Adsorption oder Speicherung mindestens einer der an einer Reaktion an dem Katalysator beteiligten Komponenten auf. Die Adsorptions- oder Speicherfähigkeit ist einer Alterung unterworfen, welche typischerweise nicht oder jedenfalls kaum vorhersagbar ist. Dabei tragen verschiedene Mechanismen zur Alterung des Katalysators bei. Beispielsweise ist eine Vergiftung möglich, bei welcher nicht an der gewünschten Reaktion beteiligte Stoffe an der Katalysatoroberfläche dauerhaft haften bleiben und so Bindungsstellen für die an der Reaktion beteiligten Stoffe blockieren. Auch eine thermische Alterung ist möglich, insbesondere indem Oberflächenbereiche eines festen Katalysatormaterials zu größeren Partikeln zusammensintern, sodass die für die Katalyse zur Verfügung stehende Oberfläche geringer wird. Auch eine Veränderung der chemischen Struktur in einem Grundgerüst des Katalysatormaterials ist im Laufe der Zeit möglich, wobei sich Bindungsenergien an der Oberfläche ändern. Dies kann entweder dazu führen, dass Reaktanden in geringerem Umfang an der Oberfläche gebunden werden, es kann aber auch dazu führen, dass die Bindungsenergien so stark erhöht werden, dass einmal gebundene Reaktanden nicht mehr abreagieren können und gebunden bleiben. Hierdurch werden wiederum Bindungsplätze besetzt, die für die weitere Katalyse nicht mehr zur Verfügung stehen. Insbesondere aufgrund der Vielzahl möglicher Alterungsmechanismen und der verschiedenen dabei ablaufenden Prozesse ist es kaum möglich, die tatsächliche Alterung eines konkreten Katalysators vorherzusagen. Es zeigt sich jedoch, dass eine Modellierung der katalytischen Reaktion die Speicherfähigkeit als Ausgangsgröße benötigt. Eine solche Modellierung wird insbesondere durchgeführt, um eine Brennkraftmaschine unter Einhaltung gesetzlicher Emissionsgrenzwerte betreiben zu können. Die Modellierung wird dabei insbesondere zur Regelung eines Abgasnachbehandlungssystems der Brennkraftmaschine und/oder der Brennkraftmaschine selbst eingesetzt.

Im Rahmen bekannter Verfahren zur Modellierung der katalytischen Reaktion des Katalysators wird dessen Speicherfähigkeit geschätzt oder als konstant angenommen. Eine Alterung des Katalysators wird dabei typischerweise als globaler Verschlechterungsfaktor, der gegebenenfalls mit vorherbestimmter Zeitabhängigkeit definiert ist, eingerechnet. Aus der deutschen Offenlegungsschrift DE 10 2011 114 700 A1 ist ein Verfahren zur Alterungserkennung eines Katalysators bekannt, wobei jedoch nur auf einen globalen Umsatzrückgang an dem Katalysator abgestellt wird. Die Speicherfähigkeit kann mithilfe dieses Verfahrens nicht direkt detektiert werden.

Aus der europäischen Patentanmeldung EP 2 180 157 A2 geht ein Diagnoseverfahren für ein Abgasnachbehandlungssystem einer Brennkraftmaschine hervor, bei welchem ein Reduktionsmittel in einen Abgasstrom in einer Menge eingebracht wird, welche auf wenigstens einem Ziel-Oberflächenbedeckungs-Parameter theta basiert, wobei theta in Übereinstimmung mit einer diagnostischen Funktion ausgelenkt wird, wobei eine operationelle Eigenschaft des Nachbehandlungssystems gemessen wird, und wobei ein Zustand einer Komponente des Nachbehandlungssystems bestimmt wird auf der Grundlage der diagnostischen Funktion und der gemessenen operationellen Eigenschaft.

Aus der DE 10 2012 217 832 A1 geht ein Verfahren zur Überwachung einer Abgasnachbehandlungskomponente hervor. Dabei wird in Abhängigkeit einer Temperatur ein Kohlenwasserstoff in das Abgassystem eingebracht und hinter der Abgasnachbehandlungskomponente die nicht konvertierte Kohlenwasserstoffmenge ermittelt.

Aus der DE 103 32 057 A1 geht ein Verfahren zum Erkennen eines mechanisch zerstörten Katalysator-Monolithen hervor.

Aus der DE 41 12 478 A1 geht ein Verfahren zur Alterungserkennung eines Katalysators hervor. Hierbei werden die Lambda-Werte im Abgas vor und nach dem Katalysator gemessen.

Der Erfindung liegt daher die Aufgabe zugrunde, ein Verfahren zu schaffen, welches die genannten Nachteile nicht aufweist, wobei es insbesondere eine genaue und direkte Erfassung der Speicherfähigkeit im Rahmen einer Alterungserkennung des Katalysators erlaubt. Der Erfindung liegt weiterhin die Aufgabe zugrunde, ein Abgasnachbehandlungssystem sowie eine Brennkraftmaschine zu schaffen, welche die genannten Nachteile nicht aufweisen.

Die Aufgabe wird gelöst, indem ein Verfahren mit den Merkmalen des Anspruchs 1 geschaffen wird.

Im Rahmen des Verfahrens wird wenigstens ein Messsignal stromabwärts des Katalysators in einem Medienstrom erfasst, welcher den Katalysator passiert. Auf den Medienstrom und/oder den Katalysator wird ein zeitlich variierendes Eingangssignal aufgeprägt, und ein Verhalten des wenigstens einen Messsignals wird in Abhängigkeit von dem zeitlich variierenden Eingangssignal ausgewertet. Auf diese Weise wird ein Alterungszustand des Katalysators ermittelt. Das Verhalten des wenigstens einen Messsignals, welches quasi als Antwort auf das zeitlich variierende Eingangssignal betrachtet wird, hängt dabei direkt von der Speicherfähigkeit des heterogenen Katalysators ab. Daher kann diese und somit auch der Alterungszustand des Katalysators unmittelbar aus dem Verhalten des Messsignals einfach, sicher und zuverlässig erkannt werden. Das hier vorgeschlagene Verfahren liefert demnach eine direkte Möglichkeit zur Messung der Speicherfähigkeit des heterogenen Katalysators. Dabei ist vorgesehen, dass zwei verschiedene Messsignale, nämlich ein erstes Messsignal und ein zweites Messsignal, stromabwärts des Katalysators erfasst und in Hinblick auf ihr Verhalten in Abhängigkeit von dem zeitlich variierenden Eingangssignal auswertet werden, wobei eine Phasenverschiebung zwischen dem ersten Messsignal und dem zweiten Messsignal zur Alterungserkennung herangezogen wird.

Der Begriff "zeitlich variierendes Eingangssignal" bezeichnet insbesondere ein Signal, das mit fortschreitender Zeit eine - bevorzugt periodische - Veränderung aufweist. Es weist vorzugsweise eine bestimmte Wellenform, beispielsweise eine Sinus- oder Rechteckform oder auch eine komplexe Wellenform auf, die bevorzugt als Überlagerung von einfachen Wellenformen darstellbar ist. Das Eingangssignal weist bevorzugt eine festgelegte Frequenz, Amplitude und/oder Phasenlage auf. Dies schließt nicht aus, dass zumindest ein Parameter des Eingangssignals, insbesondere einer der zuvor genannten Parameter, im Rahmen des Verfahrens verändert wird. Beispielsweise ist es möglich, dass die Frequenz, die Amplitude und/oder die Phasenlage des Eingangssignals im Rahmen des Verfahrens verändert wird/werden.

Das wenigstens eine Messsignal wird insbesondere zeitabhängig erfasst. Dabei wird sein zeitabhängiges Verhalten in Abhängigkeit von dem zeitlich variierenden Eingangssignal ausgewertet. Eine Frequenz und/oder eine Phasenlage des Eingangssignals ist/sind bevorzugt bekannt und/oder wird/werden vorgegeben, was die Auswertung des Verhaltens des Messsignals deutlich vereinfacht. Insbesondere kann dieses bezogen auf die Frequenz und/oder die Phasenlage des Eingangssignals ausgewertet werden.

Der Alterungszustand des Katalysators wird bevorzugt mittels eines Abgleichs des ausgewerteten Verhaltens mit mindestens einer Kennlinie und/oder wenigstens einem Kennfeld ermittelt, wobei die Kennlinie und/oder das Kennfeld Alterungszustände des Katalysators aufweisen, welche dem Verhalten des Messsignals zugeordnet sind. Alternativ oder zusätzlich ist es möglich, den Alterungszustand des Katalysators anhand eines Modells zu ermitteln, in welches das Verhalten des Messsignals als Eingangsgröße eingeht. Als Alterungszustand wird bevorzugt direkt die Speicherfähigkeit des Katalysators ermittelt.

Es wird eine Ausführungsform des Verfahrens bevorzugt, die sich dadurch auszeichnet, dass das Verfahren für die Abgasnachbehandlung einer Brennkraftmaschine durchgeführt wird. Insbesondere wird im Rahmen des Verfahrens bevorzugt ein Alterungszustand eines Katalysators ermittelt, welcher in einem Abgasnachbehandlungssystem einer Brennkraftmaschine eingesetzt wird. Das Verfahren ist dabei bevorzugt Teil einer Steuerung oder Regelung der Brennkraftmaschine. Insbesondere geht der mithilfe des Verfahrens ermittelte Alterungszustand, vorzugsweise die Speicherfähigkeit des Katalysators, in eine Modellierung der katalytischen Reaktion im Rahmen der Steuerung oder Regelung des Abgasnachbehandlungssystems und/oder der Brennkraftmaschine ein, wobei diese Modellierung die Speicherfähigkeit als Ausgangsgröße benötigt. Bei dem Katalysator kann es sich vorzugsweise um einen zur selektiven katalytischen Reduktion von Stickoxiden eingerichteten Katalysator (SCR-Katalysator), und/oder um einen Oxidationskatalysator handeln.

Es wird auch eine Ausführungsform des Verfahrens bevorzugt, das sich dadurch auszeichnet, dass eine Amplitudenänderung des wenigstens einen Messsignals zur Alterungserkennung herangezogen wird. Es zeigt sich nämlich, dass die Amplitude des Messsignals von dem Alterungszustand des Katalysators abhängt. Alternativ oder zusätzlich wird bevorzugt eine Änderung der Phasenlage des wenigstens einen Messsignals - insbesondere eine Phasenverschiebung derselben relativ zu dem Eingangssignal - zur Alterungserkennung herangezogen. Es zeigt sich nämlich, dass auch die Phasenlage von dem Alterungszustand des Katalysators abhängt. Bei einer bevorzugten Ausführungsform des Verfahrens werden Parameter des zeitlich variierenden Eingangssignals, insbesondere dessen Frequenz und/oder Phasenlage, konstant gehalten. Dabei gibt die Amplitudenänderung und/oder die Änderung der Phasenlage des Messsignals - insbesondere in Bezug auf das Eingangssignal - Auskunft über die Alterung des Katalysators bei den konstant gehaltenen Parametern des Eingangssignals.

Es wird auch eine Ausführungsform des Verfahrens bevorzugt, die sich dadurch auszeichnet, dass das zeitlich variierende Eingangssignal verändert wird. Insbesondere wird bevorzugt wenigstens ein Parameter des zeitlich variierenden Eingangssignals, beispielsweise die Frequenz, die Phasenlage und/oder die Amplitude, verändert. Eine Antwort des wenigstens einen Messsignals auf die Veränderung des Eingangssignals wird zur Alterungserkennung herangezogen. Es hat sich nämlich gezeigt, dass das Messsignal in charakteristischer Weise - abhängig von der Speicherfähigkeit des Katalysators - auf die Veränderung des Eingangssignals reagiert. Diese Reaktion des Messsignals kann daher zur Alterungserkennung herangezogen und insbesondere zur Bestimmung der Speicherfähigkeit des Katalysators verwendet werden. Dabei wird bevorzugt eine dynamische Antwort oder Reaktion des Messsignals auf die Veränderung des Eingangssignals betrachtet.

Es wird auch eine Ausführungsform des Verfahrens bevorzugt, die sich dadurch auszeichnet, dass das zeitlich variierende Eingangssignal unter ansonsten konstant gehaltenen Bedingungen für den Katalysator verändert wird. Dies bedeutet insbesondere, dass bevorzugt nur das zeitlich variierende Eingangssignal verändert wird, während alle anderen Randbedingungen für den Betrieb des Katalysators konstant gehalten werden. Hierdurch wird eine Kopplung oder Vermischung verschiedener Effekte auf das Messsignal vermieden, und die Alterungserkennung kann mit besonders hoher Genauigkeit durchgeführt werden. Besonders bevorzugt wird nur ein Parameter des zeitlich variierenden Eingangssignals, beispielsweise nur die Frequenz, nur die Phasenlage oder nur die Amplitude verändert, während alle anderen Parameter des Eingangssignals und bevorzugt auch alle anderen Betriebsbedingungen für den Katalysator unverändert bleiben. Hierdurch kann die Genauigkeit des Verfahrens nochmals erhöht werden, da die dynamische Antwort des Messsignals in Bezug auf die Speicherfähigkeit des Katalysators umso charakteristischer ist, je geringer die Zahl der geänderten Bedingungen ist. Beispielsweise ist es möglich, dass als Bedingung für den Katalysator ein diesen passierender Massenstrom des katalytisch umzusetzenden Mediums, beispielsweise ein Abgasmassenstrom einer Brennkraftmaschine, und/oder einer Temperatur im Bereich des Katalysators konstant gehalten werden.

Alternativ oder zusätzlich wird auch eine Ausführungsform des Verfahrens bevorzugt, die sich dadurch auszeichnet, dass eine Abhängigkeit des wenigstens einen Messsignals von wenigstens einer Bedingung für den Katalysator, insbesondere eine Reaktion des wenigstens einen Messsignals auf wenigstens eine veränderte Bedingung für den Katalysator, zur Alterungserkennung herangezogen wird. Bevorzugt wird dabei eine Abhängigkeit des zeitlichen Verhaltens des Messsignals von wenigstens einer Randbedingung des Katalysators herangezogen. Beispielsweise kann die Dämpfung des Systems als Funktion der Katalysatortemperatur als Kennlinie hinterlegt sein, wobei die Alterung des Katalysators aus der Änderung der Dämpfung im Vergleich zu der hinterlegten Kennlinie bestimmt wird. Eine Auswertung des Messsignals in Abhängigkeit von dem Eingangssignal erfolgt hierbei insoweit, als die Dämpfung betrachtet wird, die ebenfalls von dem zeitlich variierenden Eingangssignal abhängt.

Erfindungsgemäß zeichnet sich das Verfahren dadurch aus, dass zwei verschiedene Messsignale stromabwärts des Katalysators erfasst und in Hinblick auf ihr Verhalten in Abhängigkeit von dem zeitlich variierenden Eingangssignal ausgewertet werden. Dabei ist es möglich, dass die beiden Messsignale getrennt voneinander betrachtet werden, wobei beispielsweise für jedes der Messsignale eine Amplitudenänderung und/oder eine Änderung der Phasenlage ausgewertet wird/werden. Je nach Randbedingungen wird bevorzugt das eine oder das andere Messsignal zur Alterungserkennung herangezogen. Alternativ ist es möglich, dass beide Messsignale gemeinsam ausgewertet beziehungsweise betrachtet werden, wobei beispielsweise aus den Messsignalen berechnete Speicherfähigkeiten des Katalysators miteinander verglichen und/oder verrechnet werden, beispielsweise im Sinne einer Mittelwertbildung. Dabei ist es möglich, dass die mittels der verschiedenen Messsignale ermittelten Speicherfähigkeiten bei ihrer Verrechnung gewichtet werden, beispielsweise indem ein gewichteter Mittelwert gebildet wird. Durch gemeinsame Auswertung oder Betrachtung der beiden verschiedenen Messsignale kann eine Redundanz in das Verfahren eingeführt werden, sodass dessen Genauigkeit steigt. Werden die Signale dagegen separat voneinander betrachtet, kann stets abhängig von ansonsten herrschenden Bedingungen dasjenige Messsignal ausgewählt werden, welches eine genauere Alterungserkennung erlaubt.

Erfindungsgemäß zeichnet sich das Verfahren zusätzlich dadurch aus, dass eine Phasenverschiebung zwischen einem ersten und einem zweiten Messsignal zur Alterungserkennung herangezogen wird. Insbesondere wird bevorzugt eine Veränderung der Phasenverschiebung zur Alterungserkennung herangezogen. Es wird also eine relative Phasenlage zweier verschiedener Messsignale beobachtet, wobei diese und insbesondere deren Änderung Auskunft über die Speicherfähigkeit und den Alterungszustand des Katalysators gibt. Es ist möglich, dass die Phasenverschiebung bei festgehaltenen Parametern des zeitlich variierenden Eingangssignals betrachtet wird, sodass dieses nicht verändert wird. Es ist auch möglich, dass die Phasenverschiebung als dynamische Antwort auf eine Veränderung des zeitlich variierenden Eingangssignals betrachtet und ausgewertet wird. Dabei wird insbesondere eine Analyse der dynamischen Antwort des Katalysators auf definierte Änderungen von Eingangsbedingungen durchgeführt. Es zeigt sich, dass eine Alterung des Katalysators und insbesondere eine Veränderung von dessen Speicherfähigkeit zu einer Änderung seines dynamischen Verhaltens und damit insbesondere zu einer Änderung der dynamischen Antwort der Messsignale auf die veränderten Eingangsbedingungen führt. Durch Betrachtung der Phasenverschiebung zwischen zwei verschiedenen Messsignalen ist eine besonders genaue Alterungserkennung durchführbar.

Es wird auch eine Ausführungsform des Verfahrens bevorzugt, die sich dadurch auszeichnet, dass als erstes und/oder als zweites Messsignal eine Menge von einem an dem Katalysator umzusetzenden, vorherbestimmten Stoff in dem Medienstrom erfasst wird. Bevorzugt wird als Menge des Stoffs eine Konzentration oder ein Partialdruck desselben in dem Medienstrom betrachtet. Dabei handelt es sich bei dem Medienstrom vorzugsweise um Abgas einer Brennkraftmaschine. Der an dem Katalysator umzusetzende Stoff kann ein Stickoxid sein. Auch eine Gesamt-Stickoxid-Konzentration oder ein Gesamt-Stickoxid-Partialdruck in dem Abgas sind als Messsignal verwendbar. Alternativ oder zusätzlich wird bevorzugt eine Menge an Reduktionsmittel in dem Abgas als Messsignal herangezogen. Dabei handelt es sich bei dem Reduktionsmittel bevorzugt um Ammoniak oder um eine Ammoniak-Vorläufersubstanz, beispielsweise eine Harnstoff-Wasser-Lösung. Insbesondere wird als Messsignal daher vorzugsweise ein Ammoniakschlupf stromabwärts des Katalysators gemessen. Die Verwendung einer Stickoxid-Konzentration - wobei der Begriff Konzentration hier synonym für den Begriff Partialdruck verwendet wird - und/oder einer Reduktionsmittelkonzentration wird bevorzugt bei einem Katalysator, der als SCR-Katalysator ausgebildet ist. Es ist auch möglich, dass als Messsignal eine Kohlenmonoxid-Konzentration und/oder eine Kohlenwasserstoff-Konzentration herangezogen wird/werden. Diese Messsignale werden vorzugsweise verwendet, wenn als Katalysator ein Oxidationskatalysator verwendet wird. Auch die Verwendung eines LambdaWerts als Messsignal ist möglich.

Es wird auch eine Ausführungsform des Verfahrens bevorzugt, die sich dadurch auszeichnet, dass als Eingangssignal ein Dosiersignal für einen stromaufwärts des Katalysators in den Medienstrom einzudosierenden, an dem Katalysator umzusetzenden Stoff verwendet wird. Das Dosiersignal dient dabei vorzugsweise der Ansteuerung einer Dosiereinrichtung zur Eindosierung des Stoffs in den Medienstrom. Dabei sind eine Frequenz und/oder Phasenlage des Dosiersignals bekannt und/oder vorgebbar. Insbesondere ist/sind die Frequenz und/oder die Phasenlage des Dosiersignals vorzugsweise variierbar, sodass das zeitlich variierende Eingangssignal in Hinblick auf wenigsten einen dieser Parameter verändert werden kann. Dabei beträgt eine Frequenz zur Eindosierung eines Reduktionsmittels in einen Abgasstrom einer Brennkraftmaschine typischerweise weniger als 10 Hz. Als einzudosierender Stoff kann ein Reduktionsmittel, insbesondere eine Harnstoff-Wasser-Lösung oder Ammoniak verwendet werden. Dies ist bevorzugt der Fall, wenn als Katalysator ein SCR-Katalysator verwendet wird. Als einzudosierender Stoff kann auch ein Brennstoff, insbesondere ein Kohlenwasserstoff, verwendet werden. Dies wird besonders bevorzugt, wenn als Katalysator ein Oxidationskatalysator verwendet wird.

Es wird auch eine Ausführungsform des Verfahrens bevorzugt, die sich dadurch auszeichnet, dass ein Dosiersignal für einen stromaufwärts des Katalysators in den Medienstrom einzudosierenden, an dem Katalysator umzusetzenden Stoff abhängig von dem ermittelten Alterungszustand erzeugt wird. Das Dosiersignal wird also an die Speicherfähigkeit und damit die Alterung des Katalysators angepasst. Somit ist eine genaue Einstellung der Parameter eines Katalysationssystems, insbesondere eines Abgasnachbehandlungssystems auf den Alterungszustand des Katalysators möglich. Beispielsweise kann die Dosierfrequenz eines Reduktionsmittel-Ventils in einem SCR-System minimal gehalten werden, sodass auf diese Weise die Standzeit des Reduktionsmittel-Ventils maximiert werden kann. Insbesondere kann dabei die Dosierfrequenz in einem Neuzustand des Katalysators niedriger gewählt werden, wobei sie mit zunehmender Alterung des Katalysators erhöht wird. Es zeigt sich nämlich, dass der Katalysator im Neuzustand mit hoher Speicherfähigkeit eine stark dämpfende Wirkung auf das Verhalten des Messsignals in Abhängigkeit von dem Eingangssignal hat. Das Messsignal schwankt daher auch dann nicht besonders stark, wenn das Eingangssignal eine niedrige Frequenz aufweist. Dagegen reduziert sich die Trägheit des katalytischen Systems mit abnehmender Speicherfähigkeit, sodass dieses dynamischer auf Änderungen in dem Eingangssignal und insbesondere auch zeitlicher Variationen des Eingangssignals reagiert. Die dämpfende Wirkung nimmt ab, sodass stärkere Schwankungen des Messsignals in Abhängigkeit von dem zeitlich variierenden Eingangssignal auftreten. In diesem Fall ist es günstig, die Frequenz des Eingangssignals zu erhöhen, wodurch die zeitlichen Schwankungen des Messsignals reduziert werden können. Auf eine Verkürzung der Zeitskala, auf welcher der Katalysator dynamisch reagiert, wird also bevorzugt mit einer Anhebung der Frequenz des Eingangssignals reagiert.

Die Aufgabe wird auch gelöst, indem ein Abgasnachbehandlungssystem für eine Brennkraftmaschine mit den Merkmalen des Anspruchs 9 geschaffen wird. Dieses weist einen heterogenen Katalysator auf, sowie ein Eingangssignalerzeugungsmittel zum Aufprägen eines zeitlich variierenden Eingangssignals auf einen den Katalysator passierenden Medienstrom und/oder den Katalysator, wobei das Eingangssignalerzeugungsmittel vorzugsweise stromaufwärts des Katalysators angeordnet ist. Es ist wenigstens ein Sensor zur Erfassung von zwei verschiedenen Messsignalen vorgesehen. Der Sensor ist bevorzugt stromabwärts des Katalysators angeordnet. Das Abgasnachbehandlungssystem zeichnet sich durch ein Steuergerät aus, das eingerichtet ist zur Durchführung eines Verfahrens nach einer der zuvor beschriebenen Ausführungsformen. Somit verwirklichen sich in Zusammenhang mit dem Abgasnachbehandlungssystem die Vorteile, die bereits in Zusammenhang mit dem Verfahren erläutert wurden.

Das Steuergerät ist vorzugsweise eingerichtet zur Durchführung des Verfahrens, indem dieses fest in eine elektronische Struktur, insbesondere in eine Hardware des Steuergeräts, implementiert ist. Alternativ ist es möglich, dass ein Computerprogrammprodukt in das Steuergerät geladen ist, welches Anweisungen aufweist, aufgrund derer das Verfahren durchgeführt wird, wenn das Computerprogrammprodukt auf dem Steuergerät läuft. Das Steuergerät ist vorzugsweise mit dem Eingangssignalerzeugungsmittel sowie mit dem wenigstens einen Sensor zur Erfassung von wenigstens einem Messsignal wirkverbunden, um das Verfahren durchführen zu können.

Es ist möglich, dass im Rahmen des Verfahrens ein einziger Sensor verwendet wird. Dabei ist es möglich, dass nur ein Messsignal erfasst wird. Alternativ ist es möglich, dass der eine Sensor empfindlich für zwei verschiedene Messsignale ist, beispielsweise im Sinne einer Querempfindlichkeit. So ist es beispielsweise möglich, dass ein und derselbe Sensor sowohl auf eine Stickoxid-Konzentration als auch auf eine Ammoniak-Konzentration im Abgas empfindlich ist. Alternativ ist es möglich, dass wenigstens zwei Sensoren, vorzugsweise genau zwei Sensoren, vorgesehen sind, die vorzugsweise ausgebildet sind zur Erfassung von wenigstens zwei verschiedenen Messsignalen. Dabei sind bevorzugt auch die Sensoren verschieden ausgebildet. Beispielsweise ist es möglich, dass ein erster Sensor als Stickoxid-Sensor ausgebildet ist, wobei ein zweiter Sensor als Ammoniak-Sensor ausgebildet ist.

Es wird ein Ausführungsbeispiel des Abgasnachbehandlungssystems bevorzugt, das sich dadurch auszeichnet, dass der Katalysator als SCR-Katalysator ausgebildet ist. Alternativ ist es möglich, dass der Katalysator als Oxidationskatalysator ausgebildet ist. Weiter alternativ ist es möglich, dass der Katalysator als Partikelfilter ausgebildet ist, welcher eine katalytisch aktive Beschichtung, insbesondere eine SCR-Beschichtung oder eine oxidativ katalytische Beschichtung aufweist. Das Verfahren ist dabei vorteilhaft bei allen hier genannten Katalysatoren zur Alterungserkennung anwendbar.

Es wird auch ein Ausführungsbeispiel des Abgasnachbehandlungssystems bevorzugt, das sich dadurch auszeichnet, dass das Eingangssignalerzeugungsmittel ausgebildet ist als Dosiereinrichtung für einen stromaufwärts des Katalysators in den Medienstrom einzudosierenden, an dem Katalysator umzusetzenden Stoff. Dabei ist bevorzugt eine Frequenz, eine Phasenlage und/oder eine Amplitude der Dosiereinrichtung einstellbar. Als Amplitude ist vorzugsweise ein Öffnungshub eines Ventils der Dosiereinrichtung einstellbar. Die Dosiereinrichtung kann ausgebildet sein zur Eindosierung eines Reduktionsmittels, insbesondere einer Harnstoff-Wasser-Lösung oder von Ammoniak. Es ist auch möglich, dass die Dosiereinrichtung ausgebildet ist zur Eindosierung eines Brennstoffs, insbesondere eines Kohlenwasserstoffs. Es wird auch ein Ausführungsbeispiel des Abgasnachbehandlungssystems bevorzugt, das sich dadurch auszeichnet, dass der Sensor als Stickoxidsensor, als Ammoniaksensor, als Kohlenmonoxid-Sensor, als Kohlenwasserstoff-Sensor und/oder als Lambda-Sensor ausgebildet ist. Dabei werden ein Stickoxid- und/oder ein Ammoniaksensor insbesondere in Zusammenhang mit einem als SCR-Katalysator ausgebildeten Katalysator oder einem Partikelfilter mit SCR-Beschichtung bevorzugt. Ein als Kohlenmonoxid-, als Kohlenwasserstoff-Sensor und/oder als Lambda-Sensor ausgebildeter Sensor wird vorzugsweise in Zusammenhang mit einem als Oxidationskatalysator oder als Partikelfilter mit oxidativ katalytischer Beschichtung ausgebildeten Katalysator bevorzugt. Es ist möglich, dass der Stickoxidsensor als Sensor mit Querempfindlichkeit für Ammoniak ausgebildet ist. Auf diese Weise ist es möglich, die Stickoxidkonzentration und die Ammoniakkonzentration gemeinsam mit einem einzigen Sensor zu messen. Alternativ ist es möglich, dass separate Sensoren für die Stickoxidkonzentration einerseits und die Ammoniakkonzentration andererseits vorgesehen sind.

Die Aufgabe wird schließlich auch gelöst, indem eine Brennkraftmaschine mit den Merkmalen des Anspruchs 13 geschaffen wird. Diese weist ein Abgasnachbehandlungssystem nach einem der zuvor beschriebenen Ausführungsbeispiele auf. Somit verwirklichen sich in Zusammenhang mit der Brennkraftmaschine die Vorteile, die bereits in Zusammenhang mit dem Verfahren und dem Abgasnachbehandlungssystem erläutert wurden.

Die Brennkraftmaschine ist vorzugsweise als Hubkolbenmotor ausgebildet. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Die Beschreibung des Verfahrens einerseits und des Abgasnachbehandlungssystems sowie der Brennkraftmaschine andererseits sind komplementär zueinander zu verstehen. Merkmale des Abgasnachbehandlungssystems oder der Brennkraftmaschine, die explizit oder implizit in Zusammenhang mit dem Verfahren beschrieben wurden, sind bevorzugt einzeln oder miteinander kombiniert Merkmale eines Ausführungsbeispiels des Abgasnachbehandlungssystems oder der Brennkraftmaschine. Verfahrensschritte, die explizit oder implizit in Zusammenhang mit dem Abgasnachbehandlungssystem oder der Brennkraftmaschine beschrieben wurden, sind bevorzugt einzeln oder miteinander kombiniert Verfahrensschritte einer bevorzugten Ausführungsform des Verfahrens.

Die Erfindung wird im Folgenden anhand der Zeichnung näher erläutert. Dabei zeigen:
- Figur 1: eine schematische Darstellung eines Ausführungsbeispiels einer Brennkraftmaschine mit einem Abgasnachbehandlungssystem, und
- Figur 2: schematische, diagrammatische Darstellungen des Verhaltens von Messsignalen in Abhängigkeit von einem Eingangssignal im Rahmen einer Ausführungsform des Verfahrens.

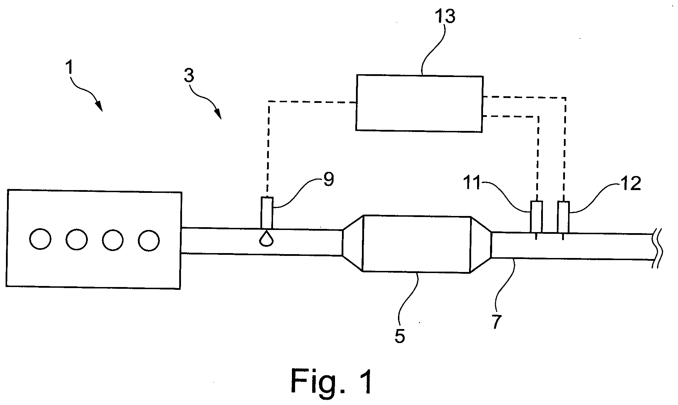

**Fig. 1** zeigt eine schematische Darstellung eines Ausführungsbeispiels einer Brennkraftmaschine 1, welche ein Abgasnachbehandlungssystem 3 aufweist. Das Abgasnachbehandlungssystem 3 weist einen heterogenen Katalysators 5 auf, der in einem Abgasstrang 7 der Brennkraftmaschine 1 angeordnet ist. Entlang des Abgasstrangs 7 ist Abgas als ein Medienstrom führbar, welcher den Katalysator 5 passiert, wobei zumindest bestimmte, von dem Abgas umfasste Stoffe, an dem Katalysator 5 umgesetzt werden.

Stromaufwärts des Katalysators 5 ist ein Eingangssignalerzeugungsmittel 9 vorgesehen, welches eingerichtet ist zum Aufprägen eines zeitlich variierenden Eingangssignals auf den in dem Abgasstrang 7 strömenden Medienstrom. Stromabwärts des Katalysators 5 sind hier ein erster Sensor 11 und ein zweiter Sensor 12 vorgesehen, die eingerichtet sind zur Erfassung zweier verschiedener Messsignale in dem Medienstrom, welcher durch den Abgasstrang 7 geführt wird, mithin in dem Abgas der Brennkraftmaschine 1. Zur Durchführung des Verfahrens ist ein Steuergerät 13 vorgesehen, welches einerseits mit dem Eingangssignalerzeugungsmittel 9 und andererseits mit den Sensoren 11, 12 wirkverbunden ist. Dabei ist das Steuergerät 13 eingerichtet zur Durchführung einer Ausführungsform des zuvor beschriebenen Verfahrens.

Bei einem bevorzugten Ausführungsbeispiel der Brennkraftmaschine 1 und des Abgasnachbehandlungssystems 3 ist der Katalysator 5 als Oxidationskatalysator ausgebildet. In diesem Fall ist vorzugsweise das Eingangssignalerzeugungsmittel 9 als Dosiereinrichtung zur Eindosierung eines Brennstoffs, insbesondere eines Kohlenwasserstoffs, in den Abgasstrom eingerichtet, wobei der Brennstoff an dem Oxidationskatalysator 5 umgesetzt wird. Dies kann beispielsweise der Anhebung einer Temperatur des Abgases dienen. Die Sensoren 11, 12 sind in diesem Fall vorzugsweise als Kohlenmonoxid-Sensor, als Kohlenwasserstoff-Sensor und/oder als Lambda-Sensor ausgebildet.

Bei einem anderen Ausführungsbeispiel der Brennkraftmaschine 1 und des Abgasnachbehandlungssystems 3 ist der Katalysator 5 vorzugsweise als SCR-Katalysator zur selektiven katalytischen Reduktion von Stickoxiden ausgebildet, welche von dem Abgas stromaufwärts des Katalysators 5 umfasst sind. Das Eingangssignalerzeugungsmittel 9 ist dabei bevorzugt ausgebildet als Dosiereinrichtung zur Eindosierung eines Reduktionsmittels, insbesondere einer Harnstoff-Wasser-Lösung oder von Ammoniak. Die Sensoren 11, 12 sind in diesem Fall bevorzugt ausgebildet als Stickoxidsensor und als Ammoniaksensor, letzterer zur Erfassung eines Ammoniakschlupfs. Alternativ zu den beiden Sensoren 11 und 12 ist es auch möglich, dass ein einzelner Sensor vorgesehen ist, mithilfe dessen sowohl eine Stickoxidkonzentration als auch eine Ammoniakkonzentration in dem Abgas messbar ist. Es kann sich insoweit um einen Stickoxid-Sensor mit Querempfindlichkeit für Ammoniak handeln.

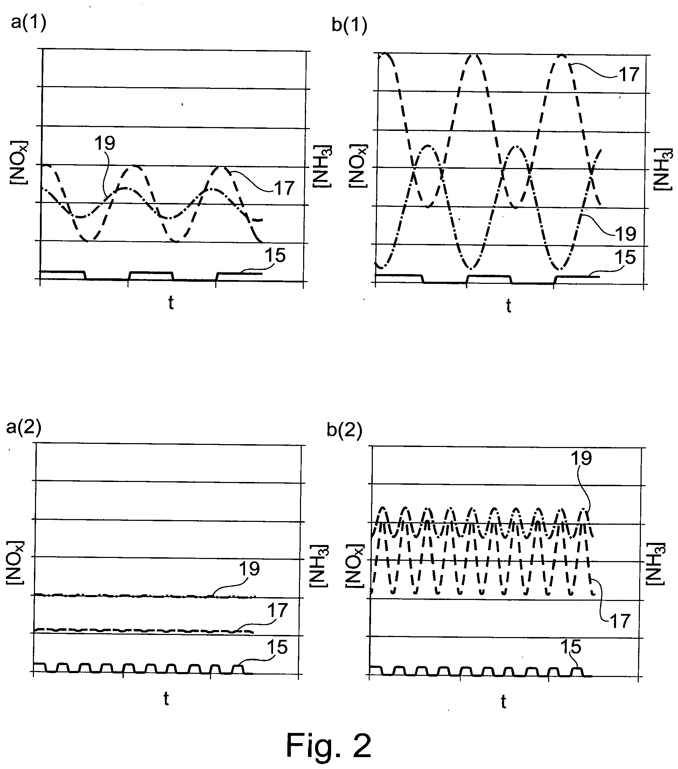

Eine bevorzugte Ausführungsform des Verfahrens wird anhand von Fig. 2 erläutert. Das Verfahren wird dabei durchgeführt zur Alterungserkennung eines SCR-Katalysators in einem Abgasnachbehandlungssystem 3 einer Brennkraftmaschine 1, wobei ein Eingangssignalerzeugungsmittel 9 verwendet wird, das als Dosiereinrichtung für eine Harnstoff-Wasser-Lösung oder Ammoniak ausgebildet ist, und wobei als zwei verschiedene Messsignale ein Messsignal eines Stickoxidsensors und ein Messsignal eines Ammoniaksensors verwendet werden. Es ist auch möglich, dass die Stickoxidkonzentration und die Ammoniakkonzentration von ein und demselben Sensor gemessen werden, beispielsweise von einem Stickoxidsensor mit Querempfindlichkeit für Ammoniak. Ein Ammoniakschlupf tritt auch auf bei der Verwendung einer Harnstoff-Wasser-Lösung als Reduktionsmittel, weil der Harnstoff in dem Abgas typischerweise stromaufwärts des SCR-Katalysators zu Ammoniak und Wasser umgesetzt wird, wobei in dem SCR-Katalysator Ammoniak als Reduktionsmittel wirkt.

Der Katalysator 5 weist dabei eine Speicherfähigkeit für Ammoniak auf, welche mit zunehmender Alterung des Katalysators 5 abnimmt. Dies kann im Rahmen des Verfahrens erkannt werden.

Zur Erläuterung des Verfahrens zeigt Figur 2 verschiedene diagrammatische Darstellungen, wobei die linksseitigen, mit dem Buchstaben a gekennzeichneten Diagramme einem Katalysator im Neuzustand entsprechen, und wobei die rechtsseitigen, mit dem Buchstaben b gekennzeichneten Darstellungen einem gealterten Katalysator entsprechen. Die oberen, mit der Ziffer (1) gekennzeichneten Diagramme sind einem Eingangssignal mit einer ersten, niedrigeren Frequenz zugeordnet, wobei die unteren, mit der Ziffer (2) gekennzeichneten Diagramme einem Eingangssignal mit einer zweiten, höheren vorherbestimmten Frequenz zugeordnet sind. In allen in Figur 2 dargestellten Diagrammen ist als durchgezogene Linie ein Eingangssignal 15 dargestellt. Dieses ist hier als Rechtecksignal ausgebildet und dient der Ansteuerung einer Dosiereinrichtung für eine Harnstoff-Wasser-Lösung oder für Ammoniak. Im Fall der mit der Ziffer (1) gekennzeichneten Diagramme beträgt eine Frequenz des Eingangssignals 15 vorzugsweise ungefähr 1 Hz. Im Fall der mit der Ziffer (2) gekennzeichneten Diagramme beträgt die Frequenz des Eingangssignals vorzugsweise ungefähr 4 Hz. Weiterhin ist in allen dargestellten Diagrammen der Verlauf einer Stickoxidkonzentration [NOₓ] in Abhängigkeit von der Zeit t als erstes Messsignal 17 mit einer gestrichelten Kurve dargestellt. Ein Verlauf einer Ammoniak-Konzentration [NH₃] in Abhängigkeit von der Zeit t ist in allen Diagrammen als ein zweites Messsignal 19 mit einer strichpunktierten Kurve dargestellt.

Es zeigt sich Folgendes: Anhand von Figur 2a(1) zeigt sich, dass im Neuzustand des Katalysators 5 das Eingangssignal 15, das erste Messsignal 17 und das zweite Messsignal 19 bestimmte Phasenlagen, insbesondere bestimmte Phasenverschiebungen relativ zueinander aufweisen. Außerdem weisen die Messsignale 17, 19 bestimmte Amplituden auf.

Wird eine Frequenz des Eingangssignals 15 erhöht, führt dies - wie in Figur 2a(2) dargestellt - zu einer starken Dämpfung der Messsignale 17, 19, welche dann quasi konstant verlaufen. Dies liegt an der hohen Speicherfähigkeit des neuen Katalysators 5, wobei Schwankungen in der eindosierten Reduktionsmittelmenge ohne weiteres durch die Pufferwirkung des in dem Katalysator gespeicherten Reduktionsmittels ausgeglichen und damit die Signale 17, 19 nivelliert beziehungsweise stark gedämpft werden. Es ergibt sich somit insbesondere eine definierte dynamische Antwort des Systems auf die Veränderung der Frequenz des Eingangssignals 15.

Anhand von Figur 2b(1) wird deutlich, dass sich bei einer Alterung des Katalysators 5 sowohl die Amplitude der Messsignale 17, 19 als auch deren Phasenlage ändert. Insbesondere ändert sich eine Phasenverschiebung zwischen dem zweiten Messsignal 19, mithin der Ammoniakkonzentration, und dem Eingangssignal 15. Zugleich ändert sich auch deutlich die Phasenverschiebung zwischen dem zweiten Messsignal 19 und dem ersten Messsignal 17. Diese Änderungen der Phasenverschiebungen sind ursächlich zurückzuführen auf die abnehmende Speicherkapazität des Katalysators 5 und charakteristisch für diese. Zugleich kann der Katalysator 5 aufgrund der geringeren Speicherfähigkeit nur noch mit geringerer Effizienz als Puffer für das Reduktionsmittel wirken, sodass sich die Amplituden der Signale 17, 19 und damit deren Schwankungen in Abhängigkeit von dem Eingangssignal 15 deutlich erhöhen. Auch dieses Verhalten ist charakteristisch für die Alterung des Katalysators 5.

Anhand von Figur 2b(2) zeigt sich, dass auch die dynamische Antwort des Systems auf eine Erhöhung der Frequenz des Eingangssignals 15 deutlich verschieden ausfällt von der dynamischen Antwort im Neuzustand, wenn der Katalysator 5 gealtert ist und eine herabgesetzte Speicherfähigkeit aufweist. Das System reagiert dabei grundsätzlich dynamischer, die Messsignale 17, 19 werden mithin in weitaus geringerem Maße gedämpft, als im Neuzustand des Katalysators. Diese Abnahme der Dämpfung beziehungsweise des Zunahme des dynamischen Verhaltens des Systems ist charakteristisch für den Alterungszustand des Katalysators 5. Zugleich ist auch die dynamische Veränderung der Signalamplituden, sowie der Phasenlagen der Messsignale 17, 19, insbesondere der Phasenverschiebung relativ zueinander und/oder relativ zu dem Eingangssignal, charakteristisch für den Alterungszustand.

Anhand von Figur 2b(1) zeigt sich noch, dass eine Amplitudenänderung und/oder eine Änderung der Phasenlage von einem der Messsignale 17, 19 - gegebenenfalls relativ zu dem Eingangssignal 15 - für sich genommen zur Alterungserkennung herangezogen werden kann/können. Es ist allerdings auch möglich, diese Informationen kombiniert zu betrachten.

Weiterhin ist es möglich, dass die Änderung der Phasenverschiebung insbesondere zwischen den beiden Messsignalen 17, 19 bei gleichbleibendem Eingangssignal 15 zur Alterungserkennung herangezogen wird. Alternativ oder zusätzlich ist es möglich, dass das Eingangssignal 15 bezüglich eines Parameters, insbesondere bezüglich seiner Frequenz, variiert wird, wobei zur Alterungserkennung eine dynamische Änderung wenigstens eines Messsignals 17, 19, vorzugsweise beider Messsignale 17, 19 herangezogen wird. Dabei ist es möglich, die Amplituden- und/oder Phasenänderungen der Messsignale 17, 19 heranzuziehen.

Vorzugsweise werden die verschiedenen Herangehensweisen miteinander kombiniert. Damit kann die Genauigkeit des Verfahrens gesteigert werden.

Bevorzugt ist es möglich, dass das Eingangssignal 15 in vorherbestimmten Zeitabständen beispielsweise bezüglich seiner Frequenz geändert wird, um die dynamische Antwort des Systems auf eine solche Änderung zu untersuchen. Zusätzlich oder alternativ kann in vorherbestimmten Zeitabständen oder auch dauerhaft eine Amplituden- und/oder Phasenlagenänderung der Messsignale 17, 19 überwacht werden.

Insgesamt zeigt sich, dass mithilfe des Verfahrens, des Abgasnachbehandlungssystems und der Brennkraftmaschine eine einfache, kostengünstige und genaue, direkte Detektion der Speicherfähigkeit des Katalysators 5 möglich ist, sodass diese mit hoher Genauigkeit insbesondere als Eingangsgröße für eine Modellierung der katalytischen Reaktion verwendet werden kann.

## Patentansprüche

1. Verfahren zur Alterungserkennung eines heterogenen Katalysators (5), mit folgenden Schritten:
- Erfassen von wenigstens einem Messsignal (17,19) in einem den Katalysator (5) passierenden Medienstrom stromabwärts des Katalysators (5);
- Aufprägen eines zeitlich variierenden Eingangssignals (15) auf den Medienstrom und/oder den Katalysator (5);
- Auswerten eines Verhalten des wenigstens einen Messsignals (17,19) in Abhängigkeit von dem zeitlich variierenden Eingangssignal (15), und
- Ermitteln eines Alterungszustands des Katalysators (5),
**dadurch gekennzeichnet, dass**
- zwei verschiedene Messsignale (17,19), nämlich ein erstes Messsignal (17) und ein zweites Messsignal (19), stromabwärts des Katalysators (5) erfasst und in Hinblick auf ihr Verhalten in Abhängigkeit von dem zeitlich variierenden Eingangssignal (15) ausgewertet werden, und wobei
- eine Phasenverschiebung zwischen dem ersten Messsignal (17) und dem zweiten Messsignal (19) zur Alterungserkennung herangezogen wird.

2. Verfahren nach Anspruch 1, **dadurch gekennzeichnet, dass** eine Amplitudenänderung und/oder eine Änderung der Phasenlage wenigstens eines Messsignals (17,19) zur Alterungserkennung herangezogen wird.

3. Verfahren nach einem der vorhergehenden Ansprüche, **dadurch gekennzeichnet, dass** das zeitlich variierende Eingangssignal (15) verändert wird, wobei eine Antwort wenigstens eines Messsignals (17,19) auf die Veränderung des Eingangssignals (15) zur Alterungserkennung herangezogen wird.

4. Verfahren nach einem der vorhergehenden Ansprüche, **dadurch gekennzeichnet, dass** das zeitlich variierende Eingangssignal (15) unter ansonsten konstant gehaltenen Bedingungen für den Katalysator (15) verändert wird.

5. Verfahren nach einem der vorhergehenden Ansprüche, **dadurch gekennzeichnet, dass** eine Abhängigkeit wenigstens eines Messsignals (17,19) von wenigstens einer Bedingung für den Katalysator (15) zur Alterungserkennung herangezogen wird.

6. Verfahren nach einem der vorhergehenden Ansprüche, **dadurch gekennzeichnet, dass** als erstes Messsignal (17) und/oder als zweites Messsignal (19) eine Menge von einem an dem Katalysator (5) umzusetzenden, vorherbestimmten Stoff in dem Medienstrom erfasst wird.

7. Verfahren nach einem der vorhergehenden Ansprüche, **dadurch gekennzeichnet, dass** als Eingangssignal (15) ein Dosiersignal für einen stromaufwärts des Katalysators (5) in den Medienstrom einzudosierenden, an dem Katalysator (5) umzusetzenden Stoff verwendet wird.

8. Verfahren nach einem der vorhergehenden Ansprüche, **dadurch gekennzeichnet, dass** ein Dosiersignal für einen stromaufwärts des Katalysators (5) in den Medienstrom einzudosierenden, an dem Katalysator (5) umzusetzenden Stoff abhängig von dem ermittelten Alterungszustand des Katalysators (5) erzeugt wird.

9. Abgasnachbehandlungssystem (3) für eine Brennkraftmaschine (1), mit einem heterogenen Katalysator (5), einem Eingangssignalerzeugungsmittel (9) zum Aufprägen eines zeitlich variierenden Eingangssignals (15) auf den Medienstrom und/oder den Katalysator, und mit wenigstens einem Sensor (11,12) zur Erfassung von zwei verschiedenen Messsignalen (17,19), **gekennzeichnet durch** ein Steuergerät (13), das eingerichtet ist zur Durchführung eines Verfahrens nach einem der Ansprüche 1 bis 10.

10. Abgasnachbehandlungssystem (3) nach Anspruch 9, **dadurch gekennzeichnet, dass** der Katalysator (5) als SCR-Katalysator oder als Oxidationskatalysator ausgebildet ist.

11. Abgasnachbehandlungssystem (3) nach einem der Ansprüche 9 und 10, **dadurch gekennzeichnet, dass** das Eingangssignalerzeugungsmittel (9) als Dosiereinrichtung für einen stromaufwärts des Katalysators (5) in den Medienstrom einzudosierenden, an dem Katalysator (5) umzusetzenden Stoff ausgebildet ist.

12. Abgasnachbehandlungssystem (3) nach einem der Ansprüche 9 bis 11, **dadurch gekennzeichnet, dass** der wenigstens eine Sensor (11,12) ausgebildet ist als Stickoxid-Sensor, als Ammoniak-Sensor, als Kohlenmonoxid-Sensor, als Kohlenwasserstoff-Sensor, oder als Lambda-Sensor.

13. Brennkraftmaschine (1), **gekennzeichnet durch** ein Abgasnachbehandlungssystem (3) nach einem der Ansprüche 9 bis 12.

## Claims

1. Method for detecting the aging of a heterogeneous catalytic converter (5), comprising the following steps:
- detecting at least one measurement signal (17, 19) in a media flow passing through the catalytic converter (5), downstream of the catalytic converter (5);
- applying a time-variant input signal (15) to the media flow and/or the catalytic converter (5);
- evaluating a behavior of the at least one measurement signal (17, 19) as a function of the time-variant signal (15), and
- determining a state of aging of the catalytic converter (5),
**characterized in that**
- two different measurement signals (17, 19), namely a first measurement signal (17) and a second measurement signal (19), are detected downstream of the catalytic converter (5) and their behavior is evaluated as a function of the time-variant input signal (15), and wherein a phase shift between the first measurement signal (17) and the second measurement signal (19) is used for the detection of aging.

2. Method according to Claim 1, **characterized in that** a change in amplitude and/or a change in the phase angle of at least one measurement signal (17, 19) is used for the detection of aging.

3. Method according to one of the preceding claims, **characterized in that** the time-variant input signal (15) is changed, wherein a response by at least one measurement signal (17, 19) to the change in the input signal (15) is used for the detection of aging.

4. Method according to one of the preceding claims, **characterized in that** the time-variant input signal (15) is changed under conditions which are otherwise kept constant for the catalytic converter (15).

5. Method according to one of the preceding claims, **characterized in that** a dependence of at least one measurement signal (17, 19) on at least one condition for the catalytic converter (15) is used for the detection of aging.

6. Method according to one of the preceding claims, **characterized in that** a quantity of pre-determined substance, which has been converted at the catalytic converter (5), is detected in the media flow as the first measurement signal (17) and/or as the second measurement signal (19).

7. Method according to one of the preceding claims, **characterized in that** a metering signal is used as an input signal (15) for a substance which is to be metered into the media flow downstream of the catalytic converter (5) and is to be converted at the catalytic converter (5).

8. Method according to one of the preceding claims, **characterized in that** a metering signal for a substance which is to be metered into the media flow downstream of the catalytic converter (5) and is to be converted at the catalytic converter (5) is generated as a function of the determined state of aging of the catalytic converter (5).

9. Exhaust gas after-treatment system (3) for an internal combusting engine (1), having a heterogeneous catalytic converter (5), an input signal-generating means (9) for applying a time-variant input signal (15) to the media flow and/or the catalytic converter, and having at least one sensor (11, 12) for detecting two different measurement signals (17, 19), **characterized by** a control unit (13) which is configured to carry out a method according to one of Claims 1 to 10.

10. Exhaust gas after-treatment system (3) according to Claim 9, **characterized in that** the catalytic converter (5) is embodied as an SCR catalytic converter or an oxidation catalytic converter.

11. Exhaust gas after-treatment system (3) according to one of Claims 9 and 10, **characterized in that in that** the input signal-generating means (9) is embodied as a metering device for a substance which is to be metered into the media flow upstream of the catalytic converter (5) and is to be converted at the catalytic converter (5).

12. Exhaust gas after-treatment system according to one of Claims 9 to 11, **characterized in that** the at least one sensor (11, 12) is embodied as a nitrogen oxide sensor, as an ammonia sensor, as a carbon monoxide sensor, as a hydrocarbon sensor or as a lambda sensor.

13. Internal combustion engine (1), **characterized by** an exhaust gas after-treatment system (3) according to one of Claims 9 to 12.

## Revendications

1. Procédé pour la détermination de la détérioration d'un catalyseur hétérogène (5), présentant les étapes suivantes:
- détecter au moins un signal de mesure (17, 19) dans un courant de fluide traversant le catalyseur (5) en aval du catalyseur (5);
- imposer un signal d'entrée (15) temporellement variable au courant de fluide et/ou au catalyseur (5) ;
- évaluer un comportement dudit au moins un signal de mesure (17, 19) en fonction du signal d'entrée temporellement variable (15), et
- déterminer un état de détérioration du catalyseur (5),
**caractérisé en ce que**
- on détecte deux signaux de mesure différents (17, 19), à savoir un premier signal de mesure (17) et un second signal de mesure (19), en aval du catalyseur (5) et on les évalue au regard de leur comportement en fonction du signal d'entrée temporellement variable (15), et dans lequel
- on utilise un décalage de phase entre le premier signal de mesure (17) et le second signal de mesure (19) pour la détermination de la détérioration.

2. Procédé selon la revendication 1, **caractérisé en ce que** l'on utilise une variation d'amplitude et/ou une variation du déphasage d'au moins un signal de mesure (17, 19) pour la détermination de la détérioration.

3. Procédé selon l'une quelconque des revendications précédentes, **caractérisé en ce que** l'on fait varier le signal d'entrée temporellement variable (15), dans lequel on utilise une réponse d'au moins un signal de mesure (17, 19) à la variation du signal d'entrée (15) pour la détermination de la détérioration.

4. Procédé selon l'une quelconque des revendications précédentes, **caractérisé en ce que** l'on fait varier le signal d'entrée temporellement variable (15) sous des conditions par ailleurs maintenues constantes pour le catalyseur (15).

5. Procédé selon l'une quelconque des revendications précédentes, **caractérisé en ce que** l'on utilise une relation de dépendance d'au moins un signal de mesure (17, 19) par rapport à au moins une condition pour le catalyseur (15) pour la détermination de la détérioration.

6. Procédé selon l'une quelconque des revendications précédentes, **caractérisé en ce que** l'on détecte comme premier signal de mesure (17) et/ou comme second signal de mesure (19) une quantité d'une substance prédéterminée à convertir dans le catalyseur (5) dans le courant de fluide.

7. Procédé selon l'une quelconque des revendications précédentes, **caractérisé en ce que** l'on utilise comme signal d'entrée (15) un signal de dosage pour une substance à ajouter dans le courant de fluide en amont du catalyseur (5) et à convertir dans le catalyseur (5) .

8. Procédé selon l'une quelconque des revendications précédentes, **caractérisé en ce que** l'on produit un signal de dosage pour une substance à ajouter dans le courant de fluide en amont du catalyseur (5) et à convertir dans le catalyseur (5) en fonction de l'état de détérioration déterminé du catalyseur (5).

9. Système de traitement des gaz d'échappement (3) pour un moteur à combustion interne (1), avec un catalyseur hétérogène (5), un moyen de production de signal d'entrée (9) pour imposer un signal d'entrée temporellement variable (15) au courant de fluide et/ou au catalyseur, et avec au moins un capteur (11, 12) pour la détection de deux signaux de mesure différents (17, 19), **caractérisé par** un appareil de commande (13), qui est configuré de façon à mettre en oeuvre un procédé selon l'une quelconque des revendications 1 à 10.

10. Système de traitement des gaz d'échappement (3) selon la revendication 9, **caractérisé en ce que** le catalyseur (5) est formé par un catalyseur SCR ou un catalyseur d'oxydation.

11. Système de traitement des gaz d'échappement (3) selon une des revendications 9 et 10, **caractérisé en ce que** le moyen de production de signal d'entrée (9) est formé par un dispositif de dosage pour une substance à ajouter dans le courant de fluide en amont du catalyseur (5) et à convertir dans le catalyseur (5).

12. Système de traitement des gaz d'échappement (3) selon l'une quelconque des revendications 9 à 11, **caractérisé en ce que** ledit au moins un capteur (11, 12) est formé par un détecteur d'oxyde d'azote, un détecteur d'ammoniac, un détecteur de monoxyde de carbone, un détecteur de dioxyde de carbone, ou un détecteur lambda.

13. Moteur à combustion interne (1), **caractérisé par** un système de traitement des gaz d'échappement (3) selon l'une quelconque des revendications 9 à 12.
